Europäisches Patentamt

(19) European Patent Office

Office européen des brevets

(11) Veröffentlichungsnummer: **0 105 864**
**B1**

(12) **EUROPÄISCHE PATENTSCHRIFT**

(45) Veröffentlichungstag der Patentschrift:
08.01.86

(51) Int. Cl.⁴: **C 22 C 38/08**, E 01 B 7/10,
B 23 K 35/30

(21) Anmeldenummer: 83890162.7

(22) Anmeldetag: 14.09.83

(54) **Herzstück, insbesondere Herzstückspitze, für Schienenkreuzungen oder -weichen, sowie Verfahren zu seiner Herstellung.**

(30) Priorität: 15.09.82 AT 3457/82

(43) Veröffentlichungstag der Anmeldung:
18.04.84 Patentblatt 84/16

(45) Bekanntmachung des Hinweises auf die Patenterteilung:
08.01.86 Patentblatt 86/2

(84) Benannte Vertragsstaaten:
BE CH DE FR IT LI LU NL SE

(56) Entgegenhaltungen:
EP - A - 0 051 401
DE - A - 1 533 298
FR - A - 1 487 202
FR - A - 2 127 799

(73) Patentinhaber: VOEST-ALPINE Aktiengesellschaft,
Friedrichstrasse 4, A-1011 Wien (AT)

(72) Erfinder: Augustin, Hubert, Dipl.-Ing., Hauptplatz 8,
A-8700 Leoben (AT)
Erfinder: Pirker, Robert, Marhaltstrasse 26,
A-8740 Zeltweg (AT)

(74) Vertreter: Haffner, Thomas M., Dr. et al,
Patentanwaltskanzlei Dipl.-Ing. Adolf Kretschmer Dr.
Thomas M. Haffner Schottengasse 3a, A-1014 Wien (AT)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Herzstück, insbesondere eine Herzstückspitze, aus Stahl für Schienenkreuzungen oder -weichen, sowie auf ein Verfahren zur Herstellung eines solchen Herzstückes. Herzstücke sind beim Überfahren durch die Räder eines Schienenfahrzeuges hohen Belastungen und einem hohen Verschleiss ausgesetzt, insbesondere wenn die Räder von einer Flügelschiene auf die Herzstückspitze bzw. von einer Herzstückspitze auf eine Flügelschiene rollen. Die Beanspruchung der Herzstückspitze ist besonders hoch beim Radüberlauf von der Flügelschiene auf die Spitze und nimmt mit grösseren Achslasten und vor allem mit der Erhöhung der Fahrgeschwindigkeiten unverhältnismässig zu, so dass an der Spitze grössere Deformationen auftreten können, welche die Lebensdauer der Herzstücke beträchtlich herabsetzen.

Um die Schlagwirkung des Rades auf die Herzstückspitze zu vermeiden, sind Herzstücke mit beweglichen Flügelschienen bzw. mit beweglichen Spitzen bekannt. Durch das Anlegen der Herzstückspitze an die Flügelschiene bzw. das Anlegen der Flügelschiene an die Herzstückspitze wird eine nicht unterbrochene Fahrfläche geschaffen. Solche Herzstücke erfordern jedoch besondere Umstellvorrichtungen und sind entsprechend kompliziert und teuer.

Weiters ist bekannt, Herzstücke mit besonderen Werkstoffeigenschaften einzusetzen. Bekannte Werkstoffe mit besonders guten Verschleisseigenschaften und hoher Beanspruchbarkeit im Radüberlaufbereich sind Manganhartstahl sowie hochvergütete niedriglegierte Stähle. Diese Stähle müssen aber mit den anschliessenden Herzstückteilen bzw. mit den Schienen gut verschweisst werden können, um im lückenlos verschweissten Gleis des modernen Oberbaues Verwendung zu finden. Die Verschweissung des Manganhartstahles und auch die von niedrig legierten vergüteten Herzstückspitzen mit den Schienenwerkstoffen erfordert jedoch wegen der eingeschränkten Schweisseignung dieser Stähle besondere Massnahmen, die ebenfalls sehr aufwendig sind. Es ist auch bekannt, im Bereich des Radüberlaufes einen Verbundwerkstoff einzusetzen, wobei der verschleissfeste Teil im Radüberlauf durch Auftragschweissung aufgebracht wird.

Bei allen diesen Ausführungen von Herzstücken sind im Radüberlaufbereich, also an der Flügelschiene und an der Herzstückspitze, entweder derselbe Werkstoff oder verschiedene Werkstoffe mit nicht sehr unterschiedlicher Festigkeit eingesetzt. Es hat sich aber überraschenderweise gezeigt, dass es bei Verwendung eines höchstfesten und damit höchstverschleissbeständigen Werkstoffes für die Spitze allein genügt, die Flügelschiene auch im Radüberlauf in normaler Ausführung (im Walzzustand) zu belassen.

Erfindungsgemäss wird nun vorgeschlagen, die Herzstückspitze bzw. die Radlauffläche des Herzstückes aus einem aushärtbaren Stahl mit der Zusammensetzung

| C | 0,01 bis 0,05 % | Ti 0,1 bis 1 % |
|---|---|---|
| Si | 0,01 bis 0,2 % | Cr 0 bis 13 % |
| Mn | 0,01 bis 0,2 % | Al 0 bis 0,2 % |
| Co | 0 bis 15 % | B 0 bis 0,1 % |
| Mo | 1,5 bis 6 % | Zr 0 bis 0,1 % |
| Ni | 7 bis 20 % | |

auszubilden. Es kann bei Verwendung dieses Stahles die gesamte Herzstückspitze aus einem derartigen Stahl bestehen, wobei die Herstellung der Spitze durch Schneiden oder spanende Bearbeitung aus einem Stück eines derartigen Stahles erfolgen kann. Auf diese Weise ist es möglich, Herzstücke, die höchsten Beanspruchungen gerecht werden, wirtschaftlich herzustellen. Die Stahlsorte, die für die Herzstückspitze gemäss der Erfindung Verwendung findet, hat bisher im Oberbau noch nicht Eingang gefunden und gehört zur Gruppe der martensitaushärtenden Stähle. Der Stahl ist gut schweissbar und im lösungsgeglühten Zustand gut bearbeitbar. Derartige Stahlsorten zeichnen sich dadurch aus, dass sie durch Auslagerung bei 200 bis 600° C eine sehr hohe Härte bei guter Zähigkeit annehmen, die durch Martensitumwandlung und/oder Ausscheidung intermetallischer Phasen erreicht wird. Die erzielbare Festigkeit liegt bei etwa 1800 bis 2200 N/mm².

In bevorzugter Weise wird das erfindungsgemässe Herzstück bzw. die Herzstückspitze dadurch hergestellt, dass die Radlauffläche durch Auftragschweissung auf einen Grundkörper aus Regelschienenstahl hergestellt wird. Hiebei kann die Auftragschweissung mit einer Stärke von etwa 15 mm vorgenommen werden.

## Patentansprüche

1. Herzstück, insbesondere Herzstückspitze, aus Stahl für Schienenkreuzungen oder -weichen, dadurch gekennzeichnet, dass die Herzstückspitze bzw. die Radlauffläche des Herzstückes aus einem aushärtbaren Stahl mit der Zusammensetzung

| C | 0,01 bis 0,05 % | Ti 0,1 bis 1 % |
|---|---|---|
| Si | 0,01 bis 0,2 % | Cr 0 bis 13 % |
| Mn | 0,01 bis 0,2 % | Al 0 bis 0,2 % |
| Co | 0 bis 15 % | B 0 bis 0,1 % |
| Mo | 1,5 bis 6 % | Zr 0 bis 0,1 % |
| Ni | 7 bis 20 % | |

besteht.

2. Verfahren zur Herstellung eines Herzstückes nach Anspruch 1, dadurch gekennzeichnet, dass die Radlauffläche durch Auftragschweissung auf einen Grundkörper aus Regelschienenstahl hergestellt wird.

3. Verfahren nach Anspruch 2, dadurch gekennzeichnet, dass die Auftragschweissung mit einer Stärke von etwa 15 mm vorgenommen wird.

## Claims

1. Frog, in particular point of frog, of steel for railway crossings or railway switches, characterised in that the point of frog or the running surface of the frog, resp., consists of an age-hardenable steel containing the following alloying elements

| | | | | | | | |
|---|---|---|---|---|---|---|---|
| C | 0.01 | to | 0,05 % | Ti | 0.1 | to | 1 % |
| Si | 0.01 | to | 0,2 % | Cr | 0 | to | 13 % |
| Mn | 0.01 | to | 0,2 % | Al | 0 | to | 0.2 % |
| Co | 0 | to | 15 % | B | 0 | to | 0.1 % |
| Mo | 1.5 | to | 6 % | Zr | 0 | to | 0.1 % |
| Ni | 7 | to | 20 % | | | | |

2. Process for manufacturing a frog of claim 1, characterised in that the running surface is produced by build-up welding onto a base body consisting of standard rail steel.

3. Process as claimed in claim 2, characterised in that build-up welding is carried out to obtain a thickness of the weld of about 15 mm.

## Revendications

1. Cœur d'aiguillage, notamment pointe de cœur, en acier pour croisements de rails ou aiguillages, caractérisé en ce que la pointe de cœur ou la surface de roulement des roues sur le cœur d'aiguillage est constituée en un acier apte au durcissement structural et possédant la composition

| | | | | | | | |
|---|---|---|---|---|---|---|---|
| C | 0,01 | à | 0,05 % | Ti | 0,1 | à | 1 % |
| Si | 0,01 | à | 0,2 % | Cr | 0 | à | 13 % |
| Mn | 0,01 | à | 0,2 % | Al | 0 | à | 0,2 % |
| Co | 0 | à | 15 % | B | 0 | à | 0,1 % |
| Mo | 1,5 | à | 6 % | Zr | 0 | à | 0,1 % |
| Ni | 7 | à | 20 % | | | | |

2. Procédé pour fabriquer un cœur d'aiguillage selon la revendication 1, caractérisé en ce que la surface de roulement des roues est réalisée par rechargement par soudage sur un corps de base constitué en un acier pour rails normaux.

3. Procédé selon la revendication 2, caractérisé en ce que le rechargement par soudage est réalisé avec une épaisseur d'environ 15 mm.